# EUROPÄISCHE PATENTSCHRIFT

(11) **EP 1 186 465 B1**
(45) Veröffentlichungstag und Bekanntmachung des Hinweises auf die Patenterteilung: **02.05.2007**
(21) Anmeldenummer: 01116370.6
(22) Anmeldetag: 06.07.2001
(51) Int. Cl.: B60N 2/00

(54) **Polsterteil für Fahrzeugsitze**
Upholstery part for vehicle seats
Pièce de rembourrage pour sièges de véhicules

(30) Priorität: 17.08.2000 DE 10040696
(43) Veröffentlichungstag der Anmeldung: 13.03.2002
(73) Patentinhaber: GRAMMER AG, 92224 Amberg (DE)
(72) Erfinder: Begemann, Michael, Dr., 92272 Freudenberg (DE); König, Wolfgang, Dr., 92245 Kümmersbruck (DE); Bösl, Thomas, 92242 Hirschau (DE)
(74) Vertreter: Ostriga, Sonnet, Wirths & Roche

(56) Entgegenhaltungen:
- EP-A- 0 731 760
- EP-A- 0 890 430
- FR-A- 2 592 334

## Beschreibung

Die Erfindung betrifft ein Polsterteil, umfassend ein kompressibles, ein Rückstellvermögen aufweisendes Trägerteil, insbesondere ein Schaumteil, und ein Bezugteil für das Trägerteil, dem ein erster Flächenabschnitt eines stichfesten und/oder schnittfesten Materials zugeordnet ist.

Ein solches Polsterteil kann ein Sitzpolster, ein Rückenpolster, ein Lehnenpolster, insbesondere Armlehnenpolster, oder ein Kopfpolster darstellen, insbesondere für einen Sitz. Der erste Flächenabschnitt aus stichfestem und/oder schnittfestem Material dient dazu, die Polsterteile eines in öffentlichen Einrichtungen angebrachten Sitzes, insbesondere in Eisenbahnen, Bussen, Flugzeugen, Wartehallen od. dgl. vor Zerstörung durch Vandalismus zu schützen. Ein mittels eines Flächenabschnittes aus stichfestem oder/und schnittfestem Material geschützter Sitz wird somit als Anti-Vandalismus-Sitz bezeichnet. Entsprechendes gilt für ein einzelnes Polsterteil.

Als Material für den stichfesten und/oder schnittfesten ersten Flächenabschnitt kommen verschiedene Materialien in Frage, beispielsweise Drahtgewebe, Drahtgeflechte, Drahtmatten, aber auch Kunststoff- oder Keramikmaterialien.

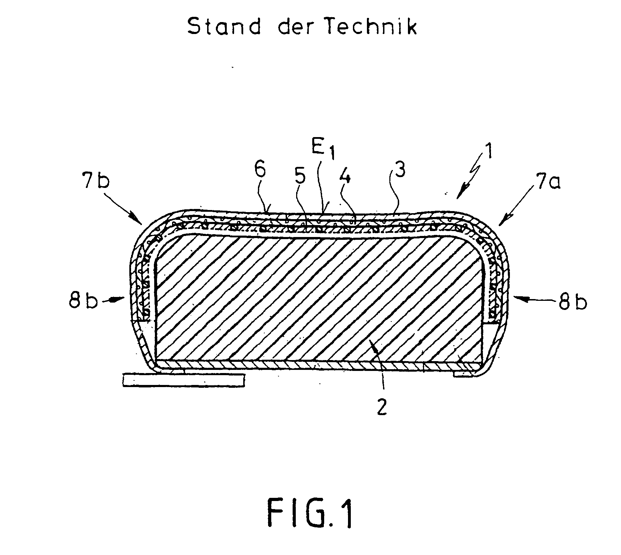

Ein Polsterteil gemäß dem Oberbegriff des Anspruchs 1 ist in der Fig. 4 der EP 0731 760 B1 dargestellt. Es handelt sich hierbei um ein Sitzpolsterteil, welches vorliegend, der Übersicht halber, als Fig. 1 dargestellt wird.

Dieses Sitzpolsterteil weist zum Schutz vor Zerstörung eine Schutzschicht, insbesondere aus einem Metallgewebe auf. Ein derartiges Polsterteil soll verhindern, dass ein Bezugteil, beispielsweise ein Bezugstoff, mittels eines scharfen Gegenstandes, insbesondere eines Messers, aufgeschnitten werden kann, und das Polstermaterial austritt.

Als problematisch hat sich bei einem solchen Sitzpolsterteil herausgestellt, dass die Schutzschicht relativ steif ausgebildet ist, wodurch der Sitzkomfort des Polsterteils, insbesondere langfristig, stark beeinträchtigt wird.

Es ist Aufgabe der Erfindung, ausgehend von einem Polsterteil gemäß Fig. 4 der EP 0731 760 B1, ein verbessertes Polsterteil bereitzustellen.

Die Erfindung löst diese Aufgabe mit den Merkmalen des Anspruches 1, und ist demgemäß dadurch gekennzeichnet, dass sich im Bereich von Wölbungen des Trägerteils, insbesondere im Kantenbereich des Trägerteils, an den ersten Flächenabschnitt wenigstens ein zweiter Flächenabschnitt aus einem flexibleren, biegeschlafferen Material anschließt.

Die Erfindung erkennt zunächst, dass bei dem Sitzpolsterteil gemäß dem Stand der Technik eine Schutzschicht aus einem relativ steifen, wenig flexiblen Material vorgesehen ist, die sich sowohl über die obere Oberfläche des Sitzpolsters als auch über weite Teile der Seitenflächen des Sitzpolsters erstreckt. Da das Material für die Schutzschicht relativ steif ausgebildet und remanent verformbar ist, zeigt ein Sitzpolster gemäß beiliegender Fig. 1 nach längerer Benutzung nicht mehr die in Fig. 1 dargestellte Form, sondern wird eine stark zum Bodenteil des Sitzpolsters hin gekrümmte Sitzoberfläche aufweisen. Das Trägerteil, welches insbesondere aus Kunststoffschaum besteht, kompressibel ist, und ein gewisses Rückstellvermögen aufweist, ist nicht in der Lage, nach Benutzung die obere Sitzpolsteroberfläche wieder in ihre Ausgangslage gemäß Fig. 1 zurückzuversetzen, da auf Grund der Verformungskräfte eine bleibende Verformung eingetreten ist.

Es ist ersichtlich, dass der Sitzkomfort eines derartigen Sitzpolsters sehr stark eingeschränkt ist.

Nach langer Benutzung kommt es im übrigen bei einem Sitzpolster gemäß Fig. 1 auch dazu, dass auf Grund einer gewissen Materialermüdung und Sprödigkeit die beispielsweise aus einem Metallgeflecht bestehende Schutzschicht im Bereich der Wölbung der Kantenbereiche bricht. Dies führt dazu, dass die gebrochenen freien Drahtenden durch den eigentlichen Bezugstoff hindurch aus dem Sitzpolsterteil heraustreten und den Benutzer gefährden können.

Die Erfindung hat nun erkannt, dass sämtliche vorstehend geschilderten Probleme aus der Tatsache resultieren, dass auch in den Wölbungsbereichen, d.h. in den Bereichen starker Krümmung der Polsterteiloberfläche, also insbesondere in den Kantenbereichen, die Schutzschicht kontinuierlich durchgehend verläuft. Da hier besonders leicht Verformungen, die dauerhaft verbleiben, erfolgen, können die Rückstellkräfte des Trägerteils nicht mehr ordnungsgemäß wirken.

Die Erfindung sieht vor, in diesen Bereichen stärkerer Krümmung einen zweiten Flächenabschnitt aus einem flexibleren, also weicheren, stärker und einfacher krümmbaren Materials vorzusehen.

Ausgehend von einem Sitzpolsterteil gemäß Fig. 1 könnte man sich beispielsweise vorstellen, dass lediglich die obere Sitzoberfläche einen ersten Flächenabschnitt aus einem schnittfesten und/oder stichfestem Material trägt. Sämtliche Wölbungsbereiche und die Seitenflächen des Sitzpolsterteils können mit einem zweiten Flächenabschnitt aus einem flexibleren, biegeschwachen Material belegt sein. Dies führt dazu, dass der Sitzkomfort des Sitzpolsterteils dadurch deutlich erhöht ist, daß die an der oberen Sitzoberfläche angeordnete Schutzschicht nun insgesamt durch die Rückstellkräfte des kompressiblen Trägerteils von der unteren Sitzpolsterfläche weg bewegt werden kann.

Außerdem wird durch die Anordnung des zweiten Flächenabschnitts jegliche Bruchgefahr der Schutzschicht im Wölbungsbereich ausgeschlossen. Damit ist die Verletzungsgefahr für den Benutzer gebannt.

Als Material für den zweiten Flächenabschnitt kommt beispielsweise ein Gewebe oder Gewirke aus einer Aramidfaser in Betracht, beispielsweise Twaron oder Kevlar. Prinzipiell sind jedoch auch jegliche anderen, flexiblen, flächigen, biegeschlaffen Werkstoffe, z.B. Vliese einsetzbar. In Frage kommen auch Fäden oder Fasern mit einer Seele aus Draht.

Ein weiterer großer Vorteil dieses erfindungsgemäßen Polsterteils liegt darin, dass auf Grund der größeren Flexibilität des zweiten Flächenabschnittes im Wölbungsbereich nunmehr keine Knitterstellen oder Druckstellen in einem ggf. vorgesehenen Bezugteil, insbesondere einem Bezugstoff, mehr auftreten können.
Außerdem ist es durch die Anbringung eines elastischeren, flexibleren zweiten Flächenabschnitts nunmehr möglich, Wölbungen stärker auszuprägen, d.h. insbesondere Krümmungen mit kleinerem Radius zu erreichen.

Gemäß einer vorteilhaften Ausstattung der Erfindung ist der zweite Flächenabschnitt mit dem ersten Flächenabschnitt verbunden. Im Gegensatz zu einer losen Anordnung ist auf diese Weise eine feste Anordnung von erstem und zweiten Flächenabschnitt zueinander gewährleistet. Die Verbindung kann entweder unmittelbar zwischen den beiden Flächenabschnitten erfolgen, wobei als Verbindungsarten beispielsweise Verkleben, Vernähen, Schweißen, Vernieten, Verstricken, Verschäumen, Verklammern, Verclipsen, Verhäkeln, Vergießen oder auch Zusammentackern oder dgl. in Betracht kommen. Alternativ kann die Verbindung zwischen dem ersten und zweiten Flächenabschnitt aber auch mittelbar erfolgen, beispielsweise indem der erste und der zweite Flächenabschnitt unabhängig voneinander an dem Trägerteil befestigt werden. Alternativ kann auch vorgesehen sein, daß eine ggf. vorzusehende zusätzliche Bezugschicht die beiden Flächenabschnitte umhüllt.

Ein weiterer Vorteil dieser Ausführungsform ist die besonders einfache Montage eines erfindungsgemäßen Polsterteils. Auf das Trägerteil kann beispielsweise der erste Flächenabschnitt und der damit verbundene zweite Flächenabschnitt aufgelegt werden und anschließend ein weiterer Verarbeitungsschritt stattfinden.

Gemäß einer weiteren vorteilhaften Ausgestaltung der Erfindung ist der zweite Flächenabschnitt schnittfest ausgebildet. Hierbei ist zu berücksichtigen, dass erfahrungsgemäß Vandalen nicht im Wölbungsbereich von Polsterteilen mit einem spitzen oder scharfen Gegenstand beispielsweise einem Messer versuchen, das Polsterteil zu zerstören, sondern dass derartige Attacken vornehmlich die im wesentlichen ebenen Flächen des Polsterteils betreffen. Die Ausbildung des zweiten Flächenabschnittes als schnittfest hat somit in diesem Zusammenhang lediglich die Bedeutung einer zusätzlichen Sicherheit, wobei klargestellt wird, dass der zweite Flächenabschnitt gleichzeitig aus einem flexibleren biegeschlafferen Material besteht.

In diesem Zusammenhang muß erwähnt werden, dass die derzeit zur Verfügung stehenden Materialien, wenn sie schnittfest und stichfest ausgebildet sein sollen, immer relativ steif ausgebildet sind. Materialien, die lediglich schnittfest sind, können auch flexibler, biegeschlaffer ausgebildet sein.

Gemäß einer weiteren vorteilhaften Ausgestaltung der Erfindung ist der erste Flächenabschnitt im wesentlichen entlang einer Ebene des Polsterteils angeordnet. Diese Ebene des Polsterteils ist beispielsweise die in Fig. 1 dargestellte obere Sitzoberfläche des Sitzpolsterteils. Wie gemäß Fig. 1 gezeigt, ist die obere Oberfläche im wesentlichen eben, wobei selbstverständlich berücksichtigt wird, dass auf Grund der Verformung durch einen Benutzer eine gewisse Krümmung dieser Flächen erzeugt wird.

Gemäß einer weiteren vorteilhaften Ausgestaltung der Erfindung weist das Polsterteil wenigstens einen dritten Flächenabschnitt eines stichfesten und/oder schnittfesten Materials auf, der im wesentlichen entlang einer Ebene des Polsterteils angeordnet ist, wobei der zweite Flächenabschnitt zwischen dem ersten und dem dritten Flächenabschnitt angeordnet ist. Dies ermöglicht eine Ausgestaltung derart, dass eine obere Sitzoberfläche und wenigstens eine Seitenfläche eines beispielsweise Sitzpolsterteils mit Flächenabschnitten aus stichfesten und/oder schnittfestem Material bedeckt sind, und so ein zusätzlicher Schutz der Seitenflächen gegen Stiche erreicht wird. Der zweite Flächenabschnitt verbindet auch hier den ersten und den dritten Flächenabschnitt derart, dass der Sitzkomfort des Polsterteils in keiner Weise beeinträchtigt wird.

Gemäß einer weiteren vorteilhaften Ausgestaltung der Erfindung überlappt der zweite Flächenabschnitt den ersten Flächenabschnitt zumindest teilweise. Dies hat den Vorteil, dass insbesondere bei Verwendung eines stich-und/oder schnittfestem Materials aus Drähten oder Drahtbestandteilen, oder irgendeinem anderen Material mit scharfen Rändern oder Kanten, das flexiblere, weichere Material die scharfkantigen Bereiche des ersten Flächenabschnittes abdeckt und überdeckt, so dass diese, falls ein zusätzlicher Bezugsstoff vorgesehen ist, nicht den Bezugsstoff zerstören können.

Gemäß einer weiteren vorteilhaften Ausgestaltung der Erfindung besteht der Flächenabschnitt aus einem Werkstück, welches zur Bildung der beiden Flächenabschnitte Bereiche unterschiedlicher Flexibilität bzw. Biegeschlaffheit aufweist. Dies ermöglicht eine besonders elegante Form der Herstellung derart, dass erster und zweiter Flächenabschnitt in einem Herstellungsvorgang einstückig hergestellt werden, wobei lediglich durch besondere Maßnahmen bei der Herstellung dafür gesorgt wird, dass die beiden Flächenabschnitte eine unterschiedliche Biegeschlaffheit bzw. Flexibilität erhalten.

Beispielsweise kann zur Schaffung dieser Bereiche unterschiedlicher Flexibilität das Material teilweise geschwächt sein. Dies kann dadurch erreicht werden, dass beispielsweise bei Maschengeweben die Maschen entsprechend größer gewählt werden, dass bei einem Drahtgewebe dünnere Drähte verwendet werden, dass bei einem Drahtgewebe Drähte aus einem anderen ggf. elastischen Material mit eingewebt werden etc. Das oben gesagte gilt selbstverständlich auch für andere Materialien als Drähte, nämlich z.B. auch für Fasern.

Weitere Vorteile der Erfindung ergeben sich aus der nachfolgenden Beschreibung zweier in den Zeichnungen dargestellter Ausführungsbeispiele. Darin zeigen:
Fig. 1 ein Sitzpolsterteil gemäß dem Stand der Technik nach der EP 0731 760 B1,
Fig. 2 ein erstes Ausführungsbeispiel der Erfindung, wobei als Polsterteil ein Sitzpolsterteil dargestellt ist,
Fig. 3 schematisch in Ansicht einen Kantenbereich des Sitzpolsterteils gemäß Fig. 2 in flachliegender Darstellung, und
Fig. 4 in Schnittdarstellung den Wölbungsbereich eines zweiten Ausführungsbeispiels eines erfindungsgemäßen Sitzpolsterteils.

Fig. 1 zeigt zunächst ein Sitzpolsterteil 1 des Standes der Technik, welches aus der Fig. 4 der EP 0 731 760 B1 bekannt ist. Hierbei ist ein Trägerteil 2 vorgesehen, welches aus einem Kunststoffschaum besteht, der kompressibel ist und Rückstellkräfte ausbilden kann.

Ein Bezugstoff 3 ist über eine Einlageschicht 4 direkt auf die schnittfeste Schutzschichte 5 aufkaschiert. Die Schutzschichte 5 aus einem schnittfesten und/oder stichfesten Material ist hier durchgängig ausgebildet und erstreckt sich von der oberen Oberfläche 6 des Sitzpolsters 1 über Wölbungsbereiche 7a, 7b bis hin zu Seitenbereichen 8a, 8b. Die Schutzschichte 5 ist relativ steif ausgebildet, so daß der Sitzkomfort des Sitzpolsterteils 1, also die Federeigenschaften und Rückstelleigenschaften des Trägerteils 2, stark vermindert sind. Außerdem kann es hier im Bereich der Wölbungen 7a, 7b zu Brüchen der Schutzschichte 5 kommen, wodurch die Gefahr von Verletzungen eines Benutzers besteht.

Während bei der Beschreibung des Sitzpolsters 1 gemäß dem Stand der Technik die Bezugszeichen 1-8 verwendet wurden, werden in der nun folgenden Beschreibung der Ausführungsbeispiele der Erfindung Bezugszeichen fortlaufend ab der Bezugsziffer 10 verwendet. Dies soll der klaren Abgrenzung dienen. Andererseits werden bei den beiden Ausführungsbeispielen der Erfindung gleiche oder vergleichbare Teile oder Elemente mit gleichen Bezugszeichen bezeichnet.

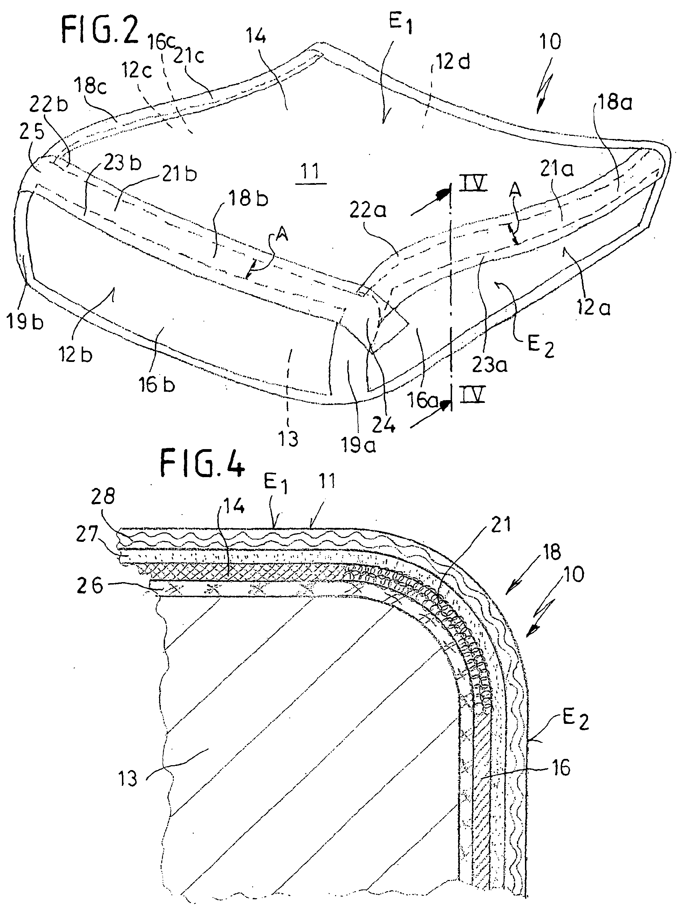

Fig. 2 zeigt ein erstes Ausführungsbeispiel eines erfindungsgemäßen Polsterteils 10, welches gemäß Fig. 2 als Sitzpolsterteil ausgebildet ist. Dargestellt ist das Sitzpolsterteil 10 in Schrägansicht von vorne. Das Polsterteil 10 ist im wesentlichen quaderförmig ausgebildet und umfaßt eine obere Oberfläche 11 und vier Seitenflächen 12a, 12b, 12c, 12d. zu der Fig. 2 sind lediglich die Seitenflächen 12a und 12b erkennbar. Etwa im Bereich der hinteren Seitenfläche 12d schließt sich in der Regel eine nicht dargestellte Rückenlehne an, um einen kompletten Sitz zu bilden. Auch die Rückenlehne kann selbstverständlich ein Polsterteil sein.

Das Sitzpolsterteil 10 gemäß Fig. 2 weist ein dort nicht dargestelltes Trägerteil 13 auf. Dieses Trägerteil 13 besteht aus einem Polsterschaum, vorzugsweise aus PUR (Polyurethan). Ein solcher Kunststoffschaum sorgt für die gewünschte Rückstellung der Sitzfläche, wenn ein Benutzer den Sitz verlässt. Dem Trägerteil 13 sind gemäß Fig. 2 ein erster Flächenabschnitt 14 (an drei Seiten gestrichelt umrandet) sowie zwei dritte Flächenabschnitte 16a, 16b (teilweise gestrichelt dargestellt) zugeordnet.

Das in Fig. 2 dargestellte Sitzpolsterteil 10 weist an der nicht dargestellten Seite 12c ggf. einen weiteren dritten Flächenabschnitt 16c auf, der auf Fig. 2 jedoch nicht erkennbar ist.

Im Bereich der hinteren Seitenfläche 12d ist bei dem dargestellten Ausführungsbeispiel in der Regel kein weiterer dritter Flächenabschnitt vorgesehen, weil sich dort in der Regel das Rückenteil anschließt oder eine Befestigung stattfindet.

Der erste Flächenabschnitt 14 ist im wesentlichen entlang einer Ebene E₁ angeordnet. Die dritten Flächenabschnitte 16a, 16b sind ebenfalls im wesentlichen entlang von Ebenen angeordnet. So ist beispielsweise der dritte Flächenabschnitt 16a im wesentlichen entlang einer Ebene E₂ angeordnet. Selbstverständlich handelt es sich bei dem Begriff der Ebene E₁, E₂ nicht um eine geometrisch exakte Ebene. Es soll damit lediglich ausgedrückt werden, dass ein Polsterteil regelmäßig Bereiche geringerer Krümmung aufweist, nämlich beispielsweise die Sitzfläche und die Seitenflächen des Polsterteils 10, die mit dem Begriff Ebene bezeichnet werden, sowie Bereiche starker Krümmung, die in der vorliegenden Anmeldung als Wölbungen 18, 18a, 18b, 18c bezeichnet werden.

Der erste Flächenabschnitt 14 und die dritten Flächenabschnitte 16a, 16b, 16c des Sitzpolsterteils 10 bestehen aus einem schnittfesten und/oder stichfestem Material. Als Materialien eignen sich dafür z.B. Metallnetze, Metallgewirke, Metallmatten, Gewebe, Gewirke, Geflechte oder Gitter bzw. Netze aus Drähten, Fäden oder Fasern aus Metallen, Keramik, Kohle oder Glas, beispielsweise auch aus Federstahl. Es handelt sich in jedem Fall um eine verhältnismäßig steife, d.h. unflexibel ausgebildete Werkstoffbahn

In den Wölbungsbereichen 18a, 18b, 18c ist jeweils ein zweiter Flächenabschnitt 21a, 21b, 21c aus einem flexibleren, biegeschlafferen Material angeordnet. Dieses Material ist insbesondere schnittfest ausgebildet. Es handelt sich dabei um beispielsweise ein Gewirk aus einer Aramidfaser, beispielsweise Twaron oder Kevlar.

Fig. 2 zeigt, dass die zweiten Flächenabschnitte 21a, 21b, 21c jeweils zu einem schmalen langen Streifen aus dem obigen Material gebildet ist. Der zweite Flächenabschnitt 21b, der in dem Wölbungsbereich 18b zwischen dem ersten Flächenabschnitt 14 und dem dritten Flächenabschnitt 16b angeordnet ist, überlappt sowohl den gemäß Fig. 2 linken, vorderen Kantenbereich 22b des ersten Flächenabschnittes 14 wie auch den bezüglich Fig. 2 oberen Kantenabschnitt 23b des dritten Flächenabschnittes 16b. Darüber hinaus ist der zweite Flächenabschnitt 21b derart lang gestreckt ausgebildet, dass er mit seinen Endbereichen 24, 25 auch noch die Wölbungsbereiche 19a, 19b teilweise überdeckt, die sich zwischen den dritten Flächenabschnitten 16a und 16b bzw. 16b und 16c befinden. Die Enden 24 und 25 des zweiten Flächenabschnittes 21b überdecken somit insgesamt die Eckbereiche des Sitzpolsterteils 10.

Diese Überdeckung oder Überlappung hat den Vorteil, dass die beispielsweise scharf ausgebildeten Kantenbereiche 22b des ersten Flächenabschnittes 14 bzw. 23b des zweiten Flächenabschnittes 16 b durch die Überlappung geschützt sind. Somit ist einerseits ausgeschlossen, dass ein ggf. zusätzlich vorgesehener Bezugsstoff 28 (Fig. 4) zerstört wird, wie auch, dass sich ein Benutzer an scharfkantig vorstehenden Elementen verletzen kann.

Insgesamt wird jedoch schon bei Betrachtung der Fig. 2 sehr deutlich, dass zwischen dem ersten Flächenabschnitt 14 und den dritten Flächenabschnitten 16a, 16b, 16c jeweils ein gewisser Abstand A besteht, der ausschließlich von den flexibleren, weicheren biegeschlafferen zweiten Flächenabschnitten 21a, 21b, 21c überdeckt wird. Durch diese erfindungsgemäße Anordnung wird der Sitzkomfort des Polsterteils deutlich erhöht. Es kann in den Wölbungsbereichen 18a, 18b, 18c nicht mehr zu einer dauerhaften Verformung kommen, da sich das flexiblere, biegeschlaffere Material der zweiten Flächenabschnitte 21a, 21b, 21c nicht dauerhaft verformen lässt.

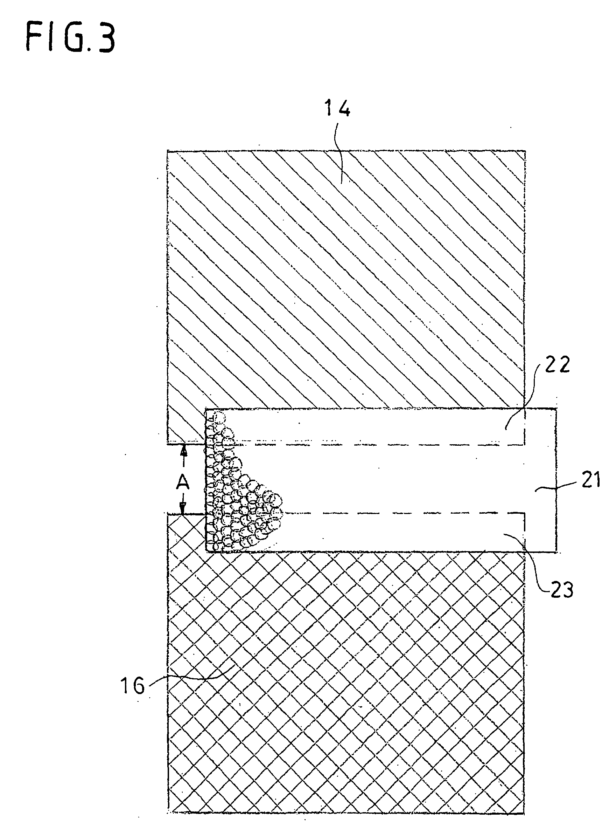

Fig. 3 zeigt schematisch in flach liegender Anordnung die Zuordnung des ersten Flächenabschnittes 14, eines zweiten Flächenabschnittes 21 und eines dritten Flächenabschnittes 16 zueinander. Der erste Flächenabschnitt 14 und der dritte Flächenabschnitt 16 bestehen aus einem relativ steifen Material, welches schnittfest und/oder stichfest ausgebildet ist. Es ist aber zu berücksichtigen, dass auch unterschiedlliche Materialien für den Flächenabschnitt 14 und den dritten Flächenabschnitt 16 vorgesehen sein können.

Ein als Streifen ausgebildeter zweiter Flächenabschnitt 21 überdeckt den Abstand A zwischen dem Kantenbereich 22 des ersten Flächenabschnittes 14 und dem Kantenbereich 23 des dritten Flächenabschnittes 16. Das Material, aus dem der zweite Flächenabschnitt 21 besteht, ist deutlich flexibler, weicher bzw. biegeschlaffer ausgebildet. Dies bedeutet, dass sich bei einem solchen Material keine dauerhafte Verformung ausbildet. Darüber hinaus ist dieses Material sehr einfach, d.h. ohne großen Kraftaufwand praktisch beliebig krümmbar.

Fig. 4 zeigt ein zweites Ausführungsbeispiel eines erfindungsgemäßen Sitzpolsterteils 10. Hier befindet sich auf dem als Schaumteil ausgebildeten Trägerteil 13 zunächst eine erste Verbindungskomponente 26. Auf dieser befindet sich eine Anordnung von einem erstem, einem zweitem, und einem drittem Flächenabschnitt, die zusammen die Schutzschicht ausbilden. Ein erster Flächenabschnitt 14 ist hier unmittelbar, d.h. ohne Überlappung mit einem zweiten Flächenabschnitt 21 verbunden. Dieser wiederum ist mit einem dritten Flächenabschnitt 16 verbunden. Dargestellt ist hier somit eine Schutzschicht, die einstückig hergestellt worden ist, bei der beispielsweise durch eine Materialschwächung ein Bereich höherer Flexibilität des zweiten Flächenabschnittes 21 erreicht worden ist. Der flexiblere zweite Flächenabschnitt 21 ist hier wiederum im Bereich der Wölbung 18 angeordnet.

Zusätzlich ist hier eine Schicht einer zweiten Verbindungskomponente 27 vorgesehen, auf der abschließend ein als Schicht ausgebildetes Bezugteil angeordnet ist.

Eine derartiges schichtartiges Bezugteil 28 ist bei dem in Fig. 2 dargestellten, nackten Sitzpolsterteil 10 selbstverständlich auch denkbar.

Grundsätzlich wird darauf hingewiesen, dass das Bezugteil 28 zwar als zusätzliche Schicht gemäß Fig. 4 vorgesehen sein kann. Es ist aber auch denkbar, dass in das Bezugteil selbst Fäden oder Fasern derart eingearbeitet werden, dass daraus die schnittfesten und/oder stichfesten Flächenabschnitte gebildet werden, wobei das Bezugteil 28 einteilig ausgebildet ist und zugleich Bereiche unterschiedlicher Flexibilität aufweisen kann, wobei wiederum Flächenabschnitte höherer Flexibilität im Bereich der Wölbungen 18 des Polsterteils 10 angeordnet sind.

Natürlich können auch zusätzliche Schichten, z.B. Flammschutzschichten vorgesehen sein.

Die Befestigung des ersten Flächenabschnittes 14 bzw. der zweiten Flächenabschnitte 21, 21a, 21b, 21c sowie der dritten Flächenabschnitte 16, 16a, 16b, 16c an dem Trägerteil 13 kann auf unterschiedliche Art und Weise erreicht werden. Beispielsweise ist eine Verkleben dieser Flächenabschnitte mit dem Trägerteil 13 möglich. Alternativ können die Flächenabschnitte jedoch auch mit dem Bezugsteil 28 verklebt sein.

Besondere Vorteile wirken sich bei dem erfindungsgemäßen Polsterteil 10 auch bei dessen Herstelllung aus. Beispielsweise ist es vorstellbar, dass die unterschiedlichen Umhüllungsschichten für das Trägerteil 13, also beispielsweise ein Bezugteil 28 und die entsprechenden ersten, zweiten und dritten Flächenabschnitte in eine Form zunächst eingelegt werden. Anschließend werden die Schichten von innen verschäumt. Da erfindungsgemäß in den Wölbungsbereichen 18, 18a, 18b, 18c zweite Flächenabschnitte 21, 21a, 21b, 21c angeordnet sind, die sehr geringe Krümmungsradien ermöglichen, können bei der Herstellung eines erfindungsgemäßen Polsterteils auf diese Weise besonders stark ausgeprägte Wölbungen 18, 18a, 18b, 18c, also entsprechend ausgeprägte Hinterschneidungen in der Form problemlos erreicht werden.

Derartig stark ausgeprägte Wölbungen waren beim Stand der Technik nicht zu erreichen.

Es wird noch darauf hingewiesen, dass die dargestellten Sitzpolsterteile 10 gemäß Fig. 2 und Fig. 4 auch in ihren Seitenbereichen dritte Flächenabschnitte 16, 16a, 16b, 16c aus schnittfestem und/oder stichfestem Material aufweisen. Bei besonders flachen Sitzen sind derartige dritte Flächenabschnitte selbstverständlich nicht notwendig.

## Patentansprüche

1. Polsterteil (10), umfassend ein kompressibles, ein Rückstellvermögen aufweisendes Trägerteil (13), insbesondere ein Schaumteil, und ein Bezugteil (28) für das Trägerteil (13), dem ein erster Flächenabschnitt (14) eines stichfesten und/oder schnittfesten Materials zugeordnet ist, **dadurch gekennzeichnet, daß** sich im Bereich von Wölbungen (18, 18a, 18b, 18c, 19a, 19b) des Trägerteils (13), insbesondere im Kantenbereich des Trägerteils (13), an den ersten Flächenabschnitt (14) wenigstens ein zweiter Flächenabschnitt (21, 21a, 21b, 21c) aus einem flexibleren, biegeschlafferen Material anschließt.

2. Polsterteil nach Anspruch 1, **dadurch gekennzeichnet, daß** der zweite Flächenabschnitt (21, 21a, 21b, 21c) mit dem ersten Flächenabschnitt (14) verbunden ist.

3. Polsterteil nach Anspruch 1 oder 2, **dadurch gekennzeichnet, daß** der zweite Flächenabschnitt (21, 21a, 21b, 21c) schnittfest ausgebildet ist.

4. Polsterteil nach einem der vorangegangenen Ansprüche, **dadurch gekennzeichnet, daß** der erste Flächenabschnitt (14) im wesentlichen entlang einer Ebene (E₁) des Polsterteils (10) angeordnet ist.

5. Polsterteil nach einem der vorangegangenen Ansprüche, **dadurch gekennzeichnet, daß** das Polsterteil (10) wenigstens einen dritten Flächenabschnitt (16, 16a, 16b, 16c) eines stichfesten und/oder schnittfesten Materials aufweist, der im wesentlichen entlang einer Ebene (E₂) des Polsterteils (10) angeordnet ist, und dass der zweite Flächenabschnitt (14) zwischen dem ersten und dem dritten Flächenabschnitt (16, 16a, 16b, 16c) angeordnet ist.

6. Polsterteil nach einem der vorangegangenen Ansprüche, **dadurch gekennzeichnet, daß** der zweite Flächenabschnitt (21, 21a, 21b, 21c) den ersten Flächenabschnitt (14) zumindest teilweise überlappt.

7. Polsterteil nach einem der vorangegangenen Ansprüche, **dadurch gekennzeichnet, daß** der erste Flächenabschnitt (14) und der zweite Flächenabschnitt (21, 21a, 21b, 21c) aus einem Werkstück bestehen, welches zur Bildung der beiden Flächenabschnitte (14, 21, 21a, 21b, 21c) Bereiche unterschiedlicher Flexibilität bzw. Biegeschlaffheit aufweist.

8. Polsterteil nach Anspruch 7, **dadurch gekennzeichnet, daß** zur Schaffung der Bereiche unterschiedlicher Flexibilität das Material des Werkstückes teilweise geschwächt ist.

## Claims

1. Cushioning part (10) comprising a compressible carrier part (13), in particular a foam part, having a restoring capacity, and a covering part (28) for said carrier part (13), with which covering part a first planar section (14) of a perforation-proof and/or cut-proof material is associated,
**characterised in that**, in the region of arcuate portions (18, 18a, 18b, 18c, 19a, 19b) of the carrier part (13), particularly in the edge region of said carrier part (13), the first planar section (14) is adjoined by at least one second planar section (21, 21a, 21b, 21c) made of a more flexible material of lower flexural strength.

2. Cushioning part according to claim 1, **characterised in that** the second planar section (21, 21a, 21b, 21c) is connected to the first planar section (14).

3. Cushioning part according to claim 1 or 2, **characterised in that** the second planar section (21, 21a, 21b, 21c) is of cut-proof construction.

4. Cushioning part according to one of the preceding claims, **characterised in that** the first planar section (14) is arranged substantially along one plane (E₁) of the cushioning part (10).

5. Cushioning part according to one of the preceding claims, **characterised in that** the cushioning part (10) has at least one third planar section (16, 16a, 16b, 16c) which is made of a perforation-proof and/or cut-proof material and is arranged substantially along one plane (E₂) of said cushioning part (10), and that the second planar section (14) is arranged between the first planar section and the third planar section (16, 16a, 16b, 16c).

6. Cushioning part according to one of the preceding claims, **characterised in that** the second planar section (21, 21a, 21b, 21c) at least partially overlaps the first planar section (14).

7. Cushioning part according to one of the preceding claims, **characterised in that** the first planar section (14) and the second planar section (21, 21a, 21b, 21c) consist of a workpiece which has regions of differing flexibility or low flexural strength for forming the two planar sections (14, 21, 21a, 21b, 21c).

8. Cushioning part according to claim 7, **characterised in that** the material of the workpiece is partially attenuated in order to provide the regions of differing flexibility.

## Revendications

1. Pièce de rembourrage (10), comprenant une partie support (13) compressible, présentant un pouvoir de rappel, en particulier une pièce en mousse, et une partie de revêtement (28) pour la partie support (13), à laquelle est associé un premier tronçon de surface (14) d'un matériau résistant aux perforations et/ou résistant aux lacérations, **caractérisé en ce que**, dans la zone de bombement (18, 18a, 18b, 18c, 19a, 19b) de la partie support (13), en particulier dans la zone d'arête de la partie support (13), au premier tronçon de surface (14) est raccordé au moins un deuxième tronçon de surface (21, 21a, 21b, 21c) réalisé en un matériau plus flexible, présentant une mollesse en flexion.

2. Pièce de rembourrage selon la revendication 1, **caractérisé en ce que** le deuxième tronçon de surface (21, 21a, 21b, 21c) est relié au premier tronçon de surface (14).

3. Pièce de rembourrage selon la revendication 1 ou 2, **caractérisé en ce que** le deuxième tronçon de surface (21, 21a, 21b, 21c) est réalisé de façon à être résistant aux lacérations.

4. Pièce de rembourrage selon l'une des revendications précédentes, **caractérisé en ce que** le premier tronçon de surface (14) est disposé sensiblement le long d'un plan (E₁) de la partie de la pièce de rembourrage (10).

5. Pièce de rembourrage selon l'une des revendications précédentes, **caractérisé en ce que** la pièce de rembourrage (10) présente au moins un troisième tronçon de surface (16, 16a, 16b, 16c) d'un matériau résistant à la perforation et/ou résistant à la lacération, disposé sensiblement le long d'un plan (E₂) de la pièce de rembourrage (10), et **en ce que** le deuxième tronçon de surface (14) est disposé entre le premier et le troisième tronçon de surface (16, 16a, 16b, 16c).

6. Pièce de rembourrage selon l'une des revendications précédentes, **caractérisé en ce que** le deuxième tronçon de surface (21, 21a, 21b, 21c) recouvre au moins partiellement le premier tronçon de surface (14).

7. Pièce de rembourrage selon l'une des revendications précédentes, **caractérisé en ce que** le premier tronçon de surface (14) et le deuxième tronçon de surface (21, 21a, 21b, 21c) sont formés d'une pièce d'oeuvre qui présente des zones ayant une flexibilité ou une mollesse en flexion différente, pour former les deux tronçons de surface (14, 21, 21a, 21b, 21c).

8. Pièce de rembourrage selon la revendication 7, **caractérisé en ce que**, pour créer les zones à flexibilité différente, on affaiblit partiellement le matériau de la pièce d'oeuvre.
